# EUROPEAN PATENT SPECIFICATION

(11) **EP 2 127 852 B1**
(45) Date of publication and mention of the grant of the patent: **02.05.2012**
(21) Application number: 09161422.2
(22) Date of filing: 28.05.2009
(51) Int. Cl.: B29C 55/14, B32B 27/08, B32B 27/20, B32B 27/28, B32B 27/32, G09F 3/04

(54) **Biaxially stretched multilayered film and related label and method**
Biaxial gedehnte Mehrschichtfolie und zugehöriges Etikett und Verfahren
Film multicouche étiré biaxialement et étiquette et procédé associés

(30) Priority: 28.05.2008 US 56809 P
(43) Date of publication of application: 02.12.2009
(73) Proprietor: Avery Dennison Corporation, Pasadena, CA 91103 (US)
(72) Inventor: Kovalchuk, John E., Painesville, OH 44077 (US); Amon, Moris, Beachwood, OH 44122 (US)
(74) Representative: Ilgart, Jean-Christophe

(56) References cited:
- WO-A-00/40407
- WO-A-01/85448
- WO-A-99/33643
- US-A- 5 443 895
- DATABASE WPI Week 200722 Thomson Scientific, London, GB; AN 2007-213551 XP002541300 & JP 2007 022033 A (OJI YUKA GOSEISHI KK) 1 February 2007 (2007-02-01)

## Description

### Cross-Reference to Related Application

This application claims priority to U.S. Provisional Patent Application No. 61/056,809 filed May 28, 2008.

### Field of the Invention

The present invention involves a biaxially stretched multilayered film, a label including the film, and a method for improving the performance of the film when used as a label. The biaxially stretched multilayered film and label and method thereof are especially useful for in-mold labeling applications.

### Background of the Invention

Polymeric films having improved performance are useful and desirable in various commercial applications that include labeling and/or decorating applications, for example, in-mold labeling applications.

In-mold labeling can be viewed as a pre-decorating or pre-labeling process used for blow molded, injection molded and thermoformed plastic containers and objects in which the container or object is decorated or labeled as it is being formed in a mold instead of after it is formed. The in-mold labeling process involves placing an in-mold label, which contains a heat-activated thermoplastic polymer, in a mold, and then introducing a molten plastic into the mold where the molten plastic takes the shape of the mold to form a container or object. When the molten plastic contacts/envelops the in-mold label, the heat-activated thermoplastic polymer is activated causing the label to adhere to and become a part of container or object as opposed to glue or pressure sensitive adhesive labels, which lie on the surface of the container or object. In-mold labels, compared to glue or pressure sensitive adhesive labels, have several advantages, which include the elimination of equipment, labor, and attendant costs for a separate labeling step. In-mold labels, in comparison to glue or pressure sensitive adhesive labels, offer better appearance and greater appeal of a labeled container/object since the in-mold label is a part of the container or object. In-mold labeling can be done using thermoplastic containers/objects, including those made of high-density polyethylene, polypropylene, poly(ethylene terephthalate), and poly(vinyl chloride). Examples of in-mold labeled containers and objects include bottles for the following: personal and health care products, automotive products, garden and agricultural products, household cleaning products including laundry and detergent products, and food and beverage products, as well as articles, for example, automotive parts and toys.

In-mold labels comprising machine-direction stretched polymeric films provide a combination of sufficient stiffness for use in the in-mold labeling process with excellent conformability to a molded container/object, and have an aesthetically smooth surface on an in-mold labeled container when the label is a cavitated opaque label. Machine-direction stretched in-nold labels can form blisters on the molded container/object especially when the label is relatively large having an area of 12 in² (77.4 cm²) or more such as those used on relatively large containers, which can be configured to hold 32 fluid ounces (0.95 liters) or more. Possible causes for this blistering include incomplete or nonuniform activation of the heat-activated thermoplastic polymer and lack of an egress for entrapped air. In-mold labels comprising conventional biaxially stretched polymeric films, in comparison to in-mold labels comprising machine-direction stretched polymeric films, are stiff in both the machine and transverse directions, and thus, are less conformable, have a rougher surface on an in-mold labeled container when the label is a cavitated opaque label, but do not tend to form blisters. Conventional biaxially stretched polymeric films generally are stretched at stretch ratios of 2:1 or higher, typically at stretch ratios of 4:1 or higher, in both the machine and transverse directions.

### Summary of the Invention

The present invention involves a biaxially stretched polymeric film where the film has been stretched in the transverse direction at a stretch ratio below 2:1. The biaxially stretched polymeric film of this invention is useful in in-mold labeling where the film provides a label having excellent blister performance while retaining conformability to an in-mold labeled container and smooth surface characteristics on an in-mold labeled container when the label is a cavitated opaque label.

### Brief Description of the Drawings

Preferred embodiments of the invention will hereinafter be described in conjunction with the appended drawings provided to illustrate and not to limit the invention. The components in the figures are not necessarily to scale, emphasis instead being placed upon illustrating the principles of the invention. In the figures, like reference numerals designate corresponding parts throughout the different views.

Figure 1 is a cross sectional view of a film having three layers according to a preferred embodiment.

Figure 2A is a cross sectional view of a film having four layers according to a preferred embodiment.

Figure 2B is a cross sectional view of another film having four layers according to a preferred embodiment.

Figure 3 is a cross sectional view of a film having five layers according to a preferred embodiment.

Figure 4 is a perspective view of a label according to a preferred embodiment.

Figure 5 is a partial perspective view of a film showing a machine direction and a transverse direction according to a preferred embodiment.

Figure 6 is a perspective view of a container that includes a label according to a preferred embodiment.

### Detailed Description of the Preferred Embodiments

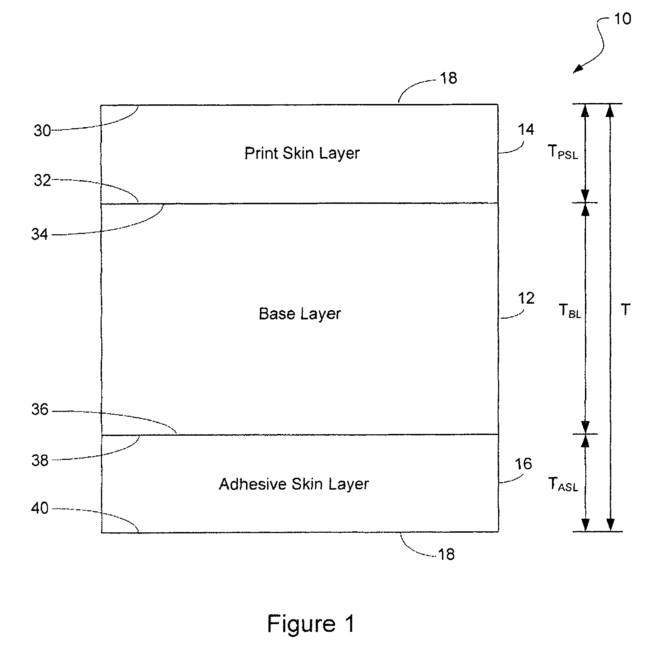

Referring to Figure 1, a biaxially stretched film 10 according to an embodiment of the present invention comprises at least three layers having a base layer 12 print skin layer 14 and adhesive skin layer 16.

### Print Skin Layer

The print skin layer 14 can include, for example, at least one thermoplastic polymer that is a polyolefin, an alkene-unsaturated carboxylic acid copolymer, an alkene-unsaturated carboxylate ester copolymer, a metal salt of an alkene-unsaturated carboxylic acid copolymer, which is referred to as an ionomer, a styrene based homopolymer or copolymer, a cyclic olefin homopolymer or copolymer, a polyurethane, a poly(vinyl chloride), a polycarbonate, a polyamide, a fluoroplastic, a polymethacrylate, a polyacrylate, a polyacrylonitrile, a polyester, a hydrocarbon resin including a hydrogenated polyterpene resin, a modified polyolefin including a maleic anhydride grafted polyolefin, a polysulfone, or a mixture of any of the foregoing polymers. Throughout this document, mixtures of components include two or more components of the same kind, or one or more components of a kind and one or more components of one or more different kinds. If the thermoplastic polymer is a polyolefin, the polyolefin can include the following: a polyethylene homopolymer, a polyethylene copolymer, a polypropylene homopolymer, a polypropylene copolymer, an alpha-olefin homopolymer or copolymer where the alpha-olefin has 4 or more carbon atoms, or mixtures of any of the foregoing polyolefins. In another embodiment, the polyolefin can include, for example, the following: a high-density polyethylene having a density of 0.94 g/cm³ or higher, a polypropylene homopolymer, a polypropylene copolymer, or a mixture of any of the foregoing polymers. Polypropylene homopolymers and copolymers include those having an ASTM D1238 melt flow rate at 230°C/2.16 kg of 1 g/10 minutes to 40 g/10 minutes. These polypropylene homopolymers and copolymers can be prepared using a Ziegler-Natta or metallocene catalyst, and can contain one or more additives including a nucleating agent for enhancing film performance. The polypropylene copolymers can be prepared by polymerizing propylene with one or more olefin comonomers comprising ethylene and C₄-C₁₂ alpha-olefins where the polypropylene copolymers have an olefin comonomer content from 0.2 to 40% by weight. Useful polypropylenes are available commercially from Huntsman Polymers of The Woodlands, TX and include, for example, HUNTSMAN P4G4K-173X, which is a nucleated polypropylene homopolymer having a density of 0.9 g/cm³ and an ASTM D1238 melt flow rate at 230°C/2.16 kg of 12 g/10 minutes, and HUNTSMAN P5M4K-070X, which is a nucleated polypropylene copolymer containing 3.2% by weight ethylene and having a density of 0.9 g/cm³and an ASTM D1238 melt flow rate 230°C/2.16 kg of 10 g/10 minutes.

In an example embodiment, the print skin layer 14 comprises at least one printable thermoplastic polymer, which can include, for example, the following: a polyethylene having a density below 0.94 g/cm³, an alkene-unsaturated carboxylic acid copolymer, an alkene-unsaturated carboxylate ester copolymer, a metal salt of an alkene-unsaturated carboxylic acid copolymer, which is referred to as an ionomer, or a mixture of any of the foregoing polymers. The polyethylene having a density below 0.94 g/cm³ can include, for example, the following: a medium density polyethylene, a linear low density polyethylene, a very low density polyethylene, a polyethylene plastomer, a low density polyethylene prepared by a free radical process, or a mixture of any of the foregoing polyethylenes. The alkene-unsaturated carboxylic acid or carboxylate ester copolymers and ionomers comprise copolymers of at least one alkene comprising C₂-C₁₂ alpha-olefins including ethylene with at least one unsaturated carboxylic acid or unsaturated carboxylate ester. Useful printable thermoplastic polymers are available commercially and include A. T. Plastics Inc.'s (of Edmonton, Canada) ATEVA^{®} series of ethylene-vinyl acetate copolymers, for example, ATEVA^{®} 1231, which contains 12 wt. % vinyl acetate and has a density of 0.932 g/cm³ and a melting point of 97°C and an ASTM D1238 melt index at 190°C/2.16 kg of 3 g/10 minutes, and ATEVA^{®} 1821, which contains 18 wt. % vinyl acetate and has a density of 0.938 g/cm³ and a melting point of 87°C and an ASTM D1238 melt index at 190°C/2.16 kg of 3 g/10 minutes, and ExxonMobil Corporation's (of Irving, Texas) EXACT^{®} series of polyethylene plastomers, which are prepared by polymerizing ethylene and a minor amount of 25 mole % or less of an alpha-olefin comonomer using a metallocene catalyst, for example, EXACT^{®} 8203, which has an octene comonomer and a density of 0.882 g/cm³ and a melting point of 73.3°C and an ASTM D1238 melt index at 190°C/2.16 kg of 3 g/10 minutes.

In an example embodiment, the print skin layer 14 comprises at least one polyolefin and at least one printable thermoplastic polymer. In another example embodiment, the print skin layer comprises a high-density polyethylene having a density of 0.94 g/cm³ or higher, a polypropylene homopolymer, a polypropylene copolymer, or a mixture of any of the foregoing polymers and a polyethylene having a density below 0.94 g/cm³, an alkene-unsaturated carboxylic acid copolymer, an alkene-unsaturated carboxylate ester copolymer, a metal salt of an alkene-unsaturated carboxylic acid copolymer, which is referred to as an ionomer, or a mixture of any of the foregoing polymers. In still another example embodiment, the print skin layer comprises a polypropylene homopolymer and/or copolymer and an ethylene-unsaturated carboxylate ester copolymer where the ethylene-unsaturated carboxylate ester copolymer comprises an ethylene-vinyl acetate copolymer, an ethylene-alkyl acrylate copolymer, an ethylene-alkyl methacrylate copolymer, or a mixture of any of the foregoing copolymers. In an example embodiment, the print skin layer comprises on a weight basis from 10% to 90% of the polyolefin and from 90% to 10% of the printable thermoplastic polymer.

In an example embodiment, the print skin layer 14 comprises at least one additive or additive concentrate. Additives can be present in commercially available thermoplastic polymers supplied by resin manufacturers where the resin comprises the thermoplastic polymer and one or more additives, for example, a nucleated polypropylene, which comprises the polypropylene polymer and a nucleating agent. Additives also are commercially available from additive manufacturers as additive concentrates that include one or more additives in a carrier resin. The additive or additive concentrate of the print skin layer comprises a nucleating agent, an antiblock agent, an antistatic agent, a processing aid, a slip agent, a pigment, a cavitating agent, an inorganic filler, an antioxidant that includes, for example, a hindered phenol where the antioxidant is commonly a component at 0.01% to 0.6% by weight of a thermoplastic polymer resin, a blowing agent, or a mixture of any one of the foregoing additives. Additives or additive concentrates can be present in at least one layer 12, 14, or 16 of the film 10 at 0.01% to 90% by weight. The nucleating agent comprises an inorganic nucleating agent that includes, for example, a silica, an organic nucleating agent that includes, for example, a metal salt of an aliphatic or aromatic carboxylic acid or a sorbitol derivate or an organophosphate, or a mixture of any of the foregoing nucleating agents. The nucleating agent can be present in at least one layer of the film at 100 to 10,000 ppm (parts per million) by weight and can be introduced as part of a thermoplastic polymer resin or as part of an additive concentrate. The nucleating agent can modify the film's crystal structure by providing smaller nucleation sites that improve clarity and die-cuttability and increase stiffness.

The antiblock agent is generally a concentrate comprising 3% to 80% by weight of an inorganic compound, for example, an amorphous silica or an organic compound, for example, a poly(methyl methacrylate) in a carrier resin where the antiblock agent concentrate can be present usually in a skin layer 14 or 16, or less commonly in a tie layer (discussed below), at 0.5 to 10% by weight. When present in a skin layer the antiblock agent serves to roughen the surfaces 18 of the film 10 sufficiently so that the film does not stick to itself. The antistatic agent usually functions by dissipating static electricity and generally comprises a concentrate comprising 1 to 10% by weight of an organic compound having both hydrophobic and hydrophilic components, for example, an alkoxylated fatty alkylamine or alkoxylated fatty amide in a carrier resin where the antistatic agent concentrate can be present usually in a skin layer at 0.5 to 10% by weight. The processing aid primarily improves the flow of thermoplastic polymers during processing and comprises organic lubricants, for example, waxy substances and fatty acid derivatives where the processing aid can be present at 0.01% to 0.6% in a thermoplastic resin or be present at 1% to 15% by weight with a carrier resin in a processing aid concentrate where the concentrate can be present at 0.5% to 10% by weight in at least one layer 12, 14, or 16 of the film including the skin layers.

The cavitating agent comprises inorganic and/or organic particulate solids, for example, a calcium carbonate and/or a polycarbonate, which are, during hot stretching, at least partially in a separate phase from the thermoplastic polymer of a layer 12, 14, or 16 of the film 10. The particulate solids usually have a mean particle size of 0.5 microns to 5 microns, and, during hot stretching of the film, cavities or voids form near or around these solids resulting in cavitation and opacity of the film. The cavitating agent can be present in a particulate solids concentrate or additive concentrate at 10% to 90% by weight with a thermoplastic polymer carrier where the concentrate can be present at 10% to 90% by weight in a layer of the film. The pigment comprises inorganic and/or organic compounds, for example, a titanium dioxide and/or an organic pigment, which can be present in a pigment or additive concentrate at 10% to 90% by weight with a thermoplastic polymer carrier where the concentrate can be present at 2.5% to 70% by weight in a layer of the film.

In an example embodiment, each of the skin layers 14 and 16 of the film 10 comprises at least one additive or additive concentrate comprising an antistatic agent, a processing aid, an antiblock agent, a nucleating agent, an antioxidant, or a mixture of any of the foregoing additives.

Useful additives are available commercially in thermoplastic polymers supplied by resin manufacturers and include the above-described HUNTSMAN P4G4K-173X and P5M4K-070X polypropylene homopolymer and copolymer both of which contain a nucleating agent, an antioxidant, and a processing aid. Useful additive concentrates are available commercially and include A. Schulman Inc.'s (of Akron, Ohio) POLYBATCH VLA-55-SF antistatic agent concentrate, which contains 5% by wt. of an organic antistatic agent in low density polyethylene (LDPE), has a density of 0.92 g/cm³, and an ASTM D1238 melt index at 190°C/2.16 kg of 19 g/10 minutes; Ampacet Corporation's (of Tarrytown, New York) AMPACET 10919 processing aid concentrate, which contains 3% by wt. of a processing aid in LDPE, has a density of 0.91 g/cm³, and an ASTM D1238 melt index at 190°C/2.16 kg of 2 g/10 minutes; A. Schulman Inc.'s POLYBATCH AB-5 antiblock agent concentrate, which contains 5% silicon dioxide in LDPE and has a density of 0.96 g/cm³; A. Schulman Inc.'s PF-97-N particulate solids concentrate, which contains 70% by wt. calcium carbonate in polypropylene homopolymer (PPH), has a density of 1.69 g/cm³, and an ASTM D1238 melt flow rate at 230°C/2.16 kg of 3 g/10 minutes; A. Schulman Inc.'s PF-92-D particulate solids concentrate, which contains 40% by wt. calcium carbonate in PPH, has a density of 1.23 g/cm³, and an ASTM D1238 melt flow rate at 230°C/2.16 kg of 4.5 g/10 minutes; and A. Schulman Inc.'s POLYBATCH WHITE P8555 SD pigment concentrate, which contains 50% by wt. titanium dioxide in PPH, has a density of 1.48 g/cm³, and an ASTM D1238 melt flow rate at 230°C/2.16 kg of 6.5 g/10 minutes.

### Base Layer

The base layer 12 comprises at least one thermoplastic polymer. The thermoplastic polymer of the base layer comprises the thermoplastic polymers described hereinabove for the print skin layer 14. In an example embodiment, the compositions of the print skin layer, base layer, and adhesive skin layer 16, described hereinbelow, are mutually different from each other. In another example embodiment, the compositions of the print skin layer and the adhesive skin layer are mutually the same, and are different from the composition of the base layer.

In an example embodiment, the base layer 12 comprises at least one polyolefin where the polyolefin comprises a polyethylene homopolymer, a polyethylene copolymer, a polypropylene homopolymer, a polypropylene copolymer, an alpha-olefin homopolymer or copolymer where the alpha-olefin has four or more carbon atoms, and mixtures of any of the foregoing polyolefins. In another example embodiment, the base layer comprises a high-density polyethylene having a density of 0.94 g/cm³ or higher, a polypropylene homopolymer, a polypropylene copolymer, or a mixture of any of the foregoing polymers. Polyolefins that are useful in the base layer, including polypropylene homopolymers and copolymers and polyethylene homopolymers and copolymers, are described hereinabove for the print skin layer 14.

In an example embodiment, the base layer 12 comprises at least one additive or additive concentrate, as described hereinabove for the print skin layer 14. In another example embodiment, the base layer comprises a nucleating agent, a processing aid, an antioxidant, a pigment, a cavitating agent or particulate solids concentrate, an inorganic filler, a blowing agent, or a mixture of any one of the foregoing additives or additive concentrates. In an example embodiment, the base layer comprises, on a weight basis, 10% to 100% of at least one polyolefin and 90% or less of at least one additive or additive concentrate, and in another embodiment, the base layer comprises, on a weight basis, 10% to 90% of at least one high-density polyethylene or polypropylene, or a mixture of any of the foregoing polymers, and 90% to 10% of at least one particulate solids concentrate or pigment concentrate, or a mixture of any of the foregoing concentrates.

### Adhesive Skin Layer

The adhesive skin layer 16 comprises at least one heat-activated thermoplastic polymer. The heat-activated thermoplastic polymer typically has a melting point of 125°C or less. The melting point of a heat-activated thermoplastic polymer can be measured with a differential scanning calorimeter (DSC). The melting point is determined by plotting heat flow versus temperature and recording the temperature at which there is a very large endothermic peak, which corresponds to the melting point. This temperature can be referred to as a peak melt temperature. In example embodiments, the heat-activated thermoplastic polymer of the adhesive skin layer has a melting point of 125°C or less, 119°C or less, or 110°C or less. In an example embodiment, the heat-activated thermoplastic polymer of the adhesive skin layer comprises a polyethylene having a density below 0.94 g/cm³, an alkene-unsaturated carboxylic acid copolymer, an alkene-unsaturated carboxylate ester copolymer, a metal salt of an alkene-unsaturated carboxylic acid copolymer, which is referred to as an ionomer, a polypropylene homopolymer or polypropylene copolymer, or mixture of any of the foregoing polypropylene polymers where the polypropylene is prepared using a metallocene catalyst, or a mixture of any of the foregoing polymers. The polyethylene having a density below 0.94 g/cm³ comprises a medium density polyethylene, a linear low density polyethylene, a very low density polyethylene, a polyethylene plastomer, a low density polyethylene prepared by a free radical process, or a mixture of any of the foregoing polyethylenes. Alkene-unsaturated carboxylic acid or unsaturated carboxylate ester copolymers, ionomers, and polyethylenes having a density below 0.94 g/cm³ that are useful as heat-activated thermoplastic polymers, including the commercially available ethylene-vinyl acetate copolymers and polyethylene plastomers, are described hereinabove for the print skin layer 14.

The polypropylene homopolymers and polypropylene copolymers that are useful in the adhesive skin layer 16 as heat-activated thermoplastic polymers comprise polypropylenes prepared using a metallocene catalyst where the polypropylenes have narrow molecular weight distributions and low amounts of hexane or xylene extractable noncrystalline polymer. These metallocene-prepared polypropylenes are described in US Patent No. 6,579,962 to Wheat et al, and US Patent Application Publication Nos. US 2005/0249900 to Baree et al. and US 2006/0118237 to Miller et al., and are commercially available from Total Petrochemicals of Brussels, Belgium. These metallocene-prepared polypropylenes include the polypropylene copolymers EOD02-15, which has a density of 0.895 g/cm³, a melting point of 119°C, and an ASTM D1238 melt flow rate at 230°C/2.16 Kg of 12 g/10 minutes; and EOD01-05, which has an ethylene content of 4.7% by wt., a melting point of 119°C, and an ASTM D1238 melt flow rate at 230°C/2.16 Kg of 9 g/10 minutes. In another example embodiment, the heat-activated thermoplastic polymer of the adhesive skin layer comprises, on a weight basis, 10% to 90% of a polyethylene having a density below 0.94 g/cm³, a polypropylene homopolymer or copolymer, or mixture of any of the foregoing polypropylene polymers where the polypropylene is prepared using a metallocene catalyst, or a mixture of any of the foregoing polymers and 90% to 10% of an alkene-unsaturated carboxylic acid copolymer, an alkene-unsaturated carboxylate ester copolymer, a metal salt of an alkene-unsaturated carboxylic acid copolymer, or a mixture of any of the foregoing copolymers. In further example embodiments, at least one heat-activated thermoplastic polymer is present in the adhesive skin layer on a weight basis of greater than 55%, greater than 68%, or greater than 81 % and has a melting point of 125°C or less.

In an example embodiment, the adhesive skin layer 16 comprises at least one heat-activated thermoplastic polymer having a melting point of 125°C or less and at least one thermoplastic polymer, as described hereinabove for the print skin layer 14. In another example embodiment, the adhesive skin layer comprises at least one heat-activated thermoplastic polymer and at least one polyolefin. The polyolefin comprises a high density polyethylene having a density of 0.94 g/cm³ or higher, a polypropylene homopolymer, a polypropylene copolymer, or a mixture of any of the foregoing polymers, as described hereinabove for the print skin layer.

In a further example embodiment, the adhesive skin layer 16 comprises at least one additive or additive concentrate, as described hereinabove for the print skin layer 14. In another example embodiment, the adhesive skin layer comprises an antistatic agent, an antiblock agent, a processing aid, a nucleating agent, an antioxidant, a blowing agent, or a mixture of any of the foregoing additives.

### Tie Layer

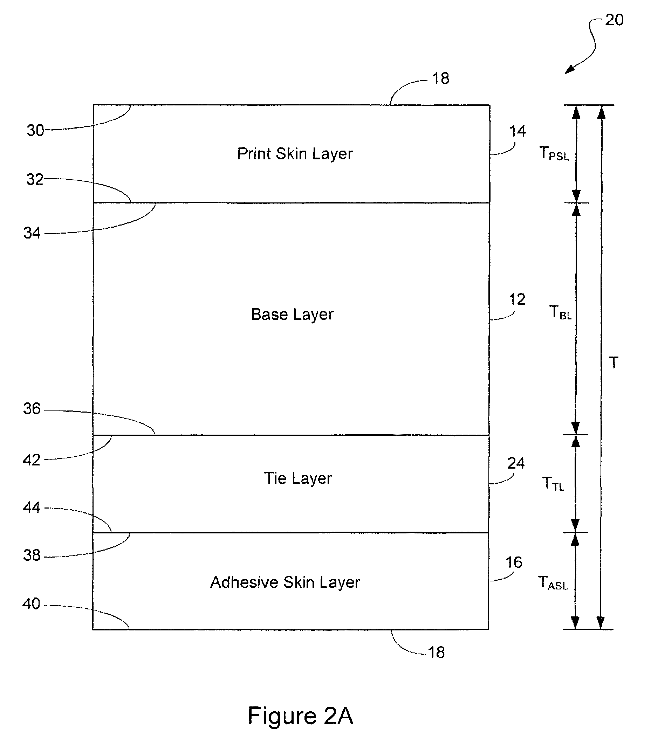

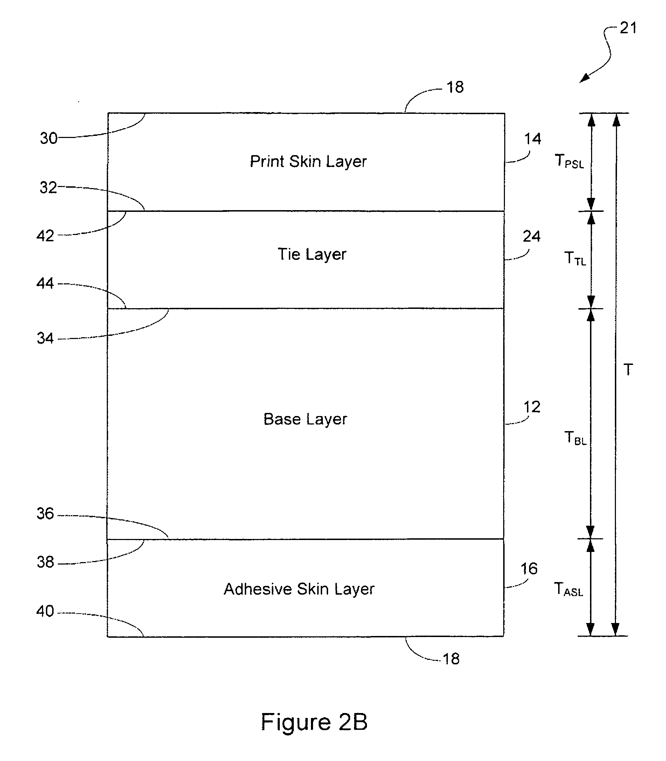

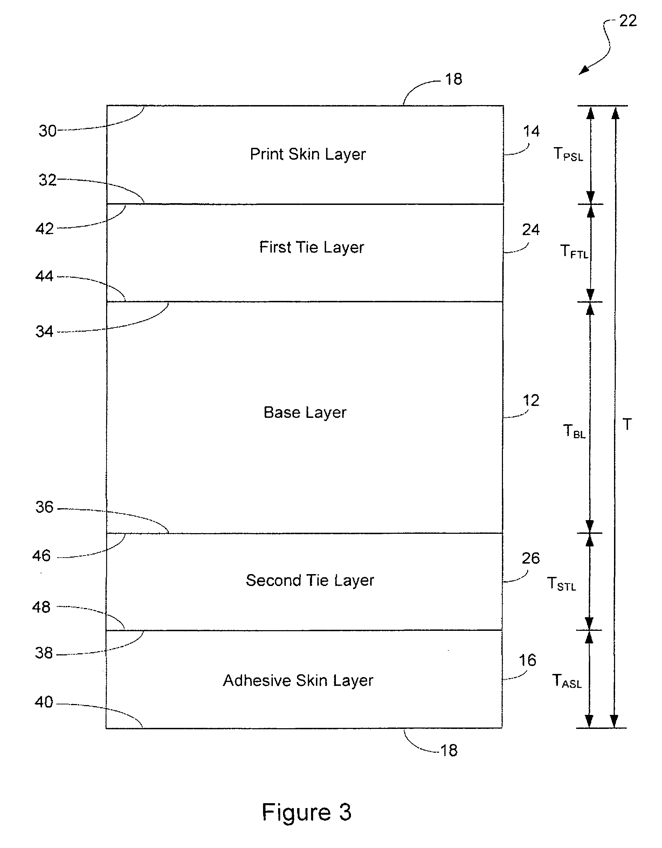

Referring additionally to Figures 2A, 2B, and 3, the film 20, 21, and 22, respectively, in example embodiments, further comprises at least one tie layer 24 and 26. One or more tie layers can be present in the film between the base layer 12 and one or two skin layers 14 and 16 to improve adherence of the base layer and skin layers to each other, and/or to improve properties of the film. The tie layer(s) have a composition that is different from the composition of the base layer and skin layers. In example embodiments where two tie layers are present in the film as depicted and described in Figure 3, the tie layers can have the same composition or different compositions. The tie layer(s) comprise at least one thermoplastic polymer, as described hereinabove for the print skin layer 14. In an example embodiment, the tie layer(s) comprise a polyolefin including a high-density polyethylene having a density of 0.94 g/cm³ or higher, a polypropylene homopolymer, a polypropylene copolymer, or a mixture of any of the foregoing polymers. In another example embodiment, the tie layer(s) comprise the above-described polyolefin and a polyethylene having a density below 0.94 g/cm³, a hydrocarbon resin that includes a hydrogenated polyterpene resin, a modified polyolefin that includes a maleic anhydride grafted polyolefin, or a mixture of any of the foregoing polymers.

In an example embodiment, the tie layer(s) 24 and 26 comprise at least one additive or additive concentrate, as described hereinabove for the print skin layer 14. In a further example embodiment, the tie layer(s) comprise a nucleating agent, an antioxidant, a processing aid, an antiblock agent, a cavitating agent or particulate solids concentrate, a pigment, or a mixture of any of the foregoing additives or additive concentrates.

### Film Construction and Processing

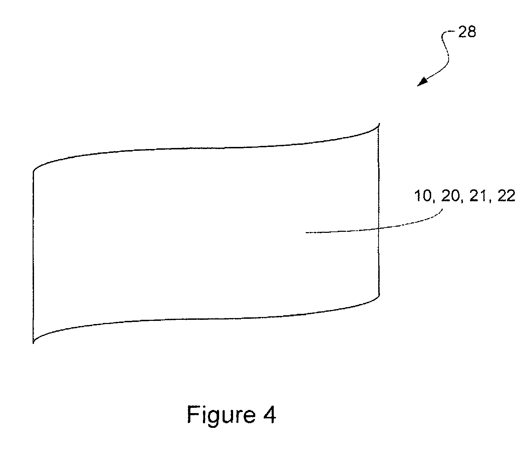

Referring additionally to Figure 4, the film 10, 20, 21, and 22 is used to make a label 28, i.e., an in-mold label. In an embodiment of invention, as depicted in Figure 1, the film 10 comprises a print skin layer 14 having an upper surface 30 and a lower surface 32, a base layer 12 having an upper surface 34 and a lower surface 36, and an adhesive skin layer 16 having an upper surface 38 and a lower surface 40, where the lower surface 32 of the print skin layer overlies the upper surface 34 of the base layer, and the upper surface 38 of the adhesive skin layer underlies the lower surface 36 of the base layer. The terms overlie and underlie mean that a first layer overlying/underlying a second layer can partially or fully cover the second layer, and that the first layer can be in direct contact with the second layer or that one or more intermediate layers, for example, a tie layer 24 or 26, can be located between the first and second layers.

In another example embodiment, as depicted in Figure 2A, a film 20 comprises a print skin layer 14 having an upper surface 30 and a lower surface 32, a base layer 12 having an upper surface 34 and a lower surface 36, a tie layer 24 having an upper surface 42 and a lower surface 44, and an adhesive skin layer 16 having an upper surface 38 and a lower surface 40 where the lower surface 32 of the print skin layer overlies the upper surface 34 of the base layer, the upper surface 42 of the tie layer underlies the lower surface 36 of the base layer, and the upper surface 38 of the adhesive skin layer underlies the lower surface 44 of the tie layer.

A further example embodiment is a film 21 comprising the four layers of Figure 2B, where the tie layer 24 is between the print skin layer 14 and the base layer 12 where the lower surface 32 of the print skin layer overlies the upper surface 42 of the tie layer, the lower surface 44 of the tie layer overlies the upper surface 34 of the base layer, and the upper surface 38 of the adhesive skin layer underlies the lower surface 36 of the base layer.

In an example embodiment, as depicted in Figure 3, a film 22 comprises a print skin layer 14 having an upper surface 30 and a lower surface 32, a first tie layer 24 having an upper surface 42 and a lower surface 44, a base layer 12 having an upper surface 34 and a lower surface 36, a second tie layer 26 having an upper surface 46 and a lower surface 48, and an adhesive skin layer 16 having an upper surface 38 and a lower surface 40 where the lower surface 32 of the print skin layer overlies the upper surface 42 of the first tie layer, the lower surface 44 of first tie layer overlies the upper surface 34 of the base layer, the upper surface 46 of the second tie layer underlies the lower surface 36 of the base layer, and the upper surface 38 of the adhesive skin layer underlies the lower surface 48 of the second tie layer.

Embodiments of the film 10, 20, 21, and 22 can be formed by one or more steps comprising extrusion of one layer from a linear or annular die to form an extrudate of one layer, coextrusion of two or more layers from a linear or annular die to form a coextrudate of two or more layers, coating of one or more layers onto a previously formed layer or multilayer composite, lamination of two or more previously formed layers, or any combination of the foregoing steps. In several example embodiments, the film is formed by an extrusion of the base layer and the extruded base layer is then coated with a liquid adhesive resin and liquid print resin to form a three-layered film comprising print skin base and adhesive skin layers. The liquid adhesive resin and liquid print resin can be applied as a coating to a base layer, as described in US Patent No. 5,254,302 to Yamanaka. The liquid adhesive resin comprises at least one heat-activated thermoplastic polymer in a solvent, which, after application to the base layer, is dried to form an adhesive skin layer, as described hereinabove for the adhesive skin layer and in US Patent No. 5,254,302 to Yamanaka. In an example embodiment, the film is formed by coextrusion of the base layer and the print skin layer. The base layer of this coextrudate is coated with a liquid adhesive resin to form a three-layered film 10 comprising print skin, base, and adhesive skin layers. In another example embodiment, the film is formed by coextrusion of the base layer and the adhesive skin layer. The base layer of this coextrudate is coated with a liquid print resin to form a three-layered film comprising print skin, base and adhesive skin layers. In a further example embodiment, the film is formed by coextrusion of the print skin, base, and adhesive skin layers to give a film comprising a three-layered coextrudate.

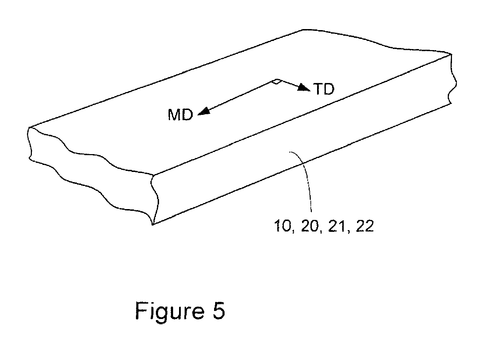

Referring to Figures 4 and 5, the film, before it is converted to a label 10, 20, 21, and 22, is oriented biaxially by biaxially stretching the film in the machine and transverse directions. The machine direction (MD) is the direction that the film is advanced during its manufacture, and the transverse direction (TD) is normal or perpendicular to the machine direction. Methods for extruding and/or coextruding and orienting by hot stretching in the machine direction in a machine-direction orientation (MDO) unit and annealing and surface treating films are known and include the methods described in US Patent No. 6,716,501 to Kovalchuk et al. Methods for hot stretching in the transverse direction and annealing are known and include simultaneous stretching in both the machine and transverse directions on a Brueckner Maschinenbau (of Siegsdorf, Germany) LISIM^{®} simultaneous biaxially film stretching production line, and stretching in the transverse direction in a tenter oven unit, as described in US Patent Application Publication No. 2005/0276943 to Iwasa et al.

In an example embodiment, a base layer is extruded, the extruded base layer is coated with two skin layers, as described above, and the coated extruded base layer is biaxially stretched. In another example embodiment, a two-layered film comprising a base layer is coextruded, as described above, a third layer is applied as a coating, and the coated coextrudate is biaxially stretched. In another example embodiment, the base layer and print skin layer are coextruded, the coextrudate is coated with a liquid adhesive resin to form a film comprising print skin, base, and adhesive skin layers, and the film is biaxially stretched.

In an example embodiment, the print skin, base and adhesive skin layers are coextruded and the coextrudate is biaxially stretched. In another embodiment, this coextrudate is first stretched in the machine direction, and then stretched in the transverse direction.

Embodiments of the film 10, 20, 21, and 22, as described hereinabove, can be biaxially oriented or biaxially stretched by hot stretching it in the machine and transverse directions at the softening temperature of the film and generally at, or above, the expected service temperature of the in-mold labeling process. In several example embodiments, the film can be hot stretched, or hot stretched and annealed, at 88°C to 177°C (190 °F to 350°F), 93 °C to 16°C (200°F to 330°F), or 99°C to 154°C (210°F to 310°F). An embodiment of the film is first stretched in a machine or transverse direction, and then, stretched secondly in a machine or transverse direction where the first and second stretchings are in different directions. In another example embodiment, the film is simultaneously stretched in both the machine and transverse directions. The film can be stretched in a first direction at a stretch ratio of greater than 2:1 to 10:1, greater than 3:1 to 9:1, or greater than 4:1 to 8:1. The film can be stretched in a second direction at a stretch ratio of 1.02:1 to 1.8:1, 1.03:1 to 1.55:1, 1.04:1 to 1.3:1, or 1.05:1 1 to 1.25:1. The stretch ratio is the ratio of the length of the film after it is stretched to the length of the film before it is stretched. In example embodiments, the first direction is the machine direction and the second direction is the transverse direction, or the first direction is the transverse direction and the second direction is the machine direction. In other example embodiments, the film is first stretched in the first direction and then stretched in the second direction, or the film is first stretched in the second direction and then stretched in the first direction. The film can be annealed after each consecutive stretching step, or can be annealed once after completion of a simultaneous stretching step or the final consecutive stretching step. The annealing step or steps provide dimensional stability to the film so that it does not become distorted due to shrinkage during in-mold labeling service.

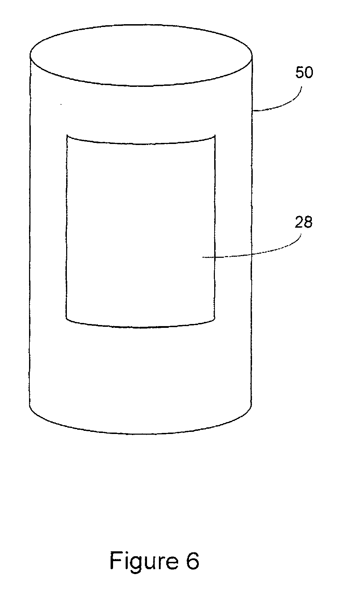

Although dimensional stability regarding shrinkage is required, some shrinkage of the film 10, 20, 21, and 22 is believed to be needed during the in-mold labeling process since a thermoplastic container 50 (see Figure 6), that includes a label 28 made from the film, tends to contract or shrink upon cooling. It is believed that differential shrinkage between the container and the label can at least in part contribute to blister formation if the container shrinks appreciably more than the label. In several example embodiments, the film is annealed and has an ASTM D1204 (after 15 minutes in an oven at 100°C) or ASTM D2732 (after 20 seconds in an oil bath at 100°C) MD and TD shrinkage of less than 12%, less than 10%, or less than 8%. In other example embodiments, the film is annealed and has an ASTM D1204 or ASTM D2732 MD and TD shrinkage of at least 0.5%, at least 0.7%, or at least 0.9%. Since the range and ratio limits used throughout this description are combinable, the annealed film can, for example, have a shrinkage of at least 0.5% to less than 12%. In an example embodiment, the film is first stretched in the first direction, which is the machine direction, annealed, and then stretched in the second direction, which is the transverse direction, and annealed. Manufacturing line speeds during film processing can vary widely from 0.051 meters per second or m/s (10 feet per minute or fpm) to 5,080 m/s (1,000 fpm) and typically during stretching and annealing vary from 0,203 m/s (40 fpm) to 4,064 m/s (800 fpm), 0,356 m/s (70 fpm) to 3,556 m/s (700 fpm), 0,508 m/s (100 fpm) to 3,048 m/s (600 fpm), or 0,584 m/s (115 fpm) to 2,540 m/s (500 fpm).

The film 10, 20, 21, and 22 needs to be sufficiently stiff to provide satisfactory performance including withstanding mechanical and thermal stresses during printing, proper dispensing in labeling operations, and forming an essentially blister-free label on a thermoplastic container 50 in an in-mold labeling operation. Film stiffness depends on the composition of the film, which comprises thermoplastic polymer resins and additives, its overall thermal processing, and whether the film is or is not oriented. In general orientation including hot stretching tends to increase film stiffness. In several example embodiments, the biaxially stretched film has an ASTM D882 2% secant modulus of the following: at least 679,134 kilopascals or kPa (98,500 pounds per square inch or psi), at least 717,055 kPa (104,000 psi), or at least 754,976 kPa (109,500 psi) in the first direction. In other example embodiments, the biaxially stretched film has an ASTM D882 2% secant modulus of the following: 679,134 kPa (98,500 psi) to 2,447,639 kPa (355,000 psi), 717,055 kPa (104,000 psi) to 2,240,796 kPa (325,000 psi), or 754,976 kPa (109,500 psi) to 1,999,480 kPa (290,000 psi) in the first direction. In further example embodiments, the biaxially stretched film has an ASTM D882 2% secant modulus of 103,421 kPa (15,000 psi) to 1,378,951 kPa (200,000 psi), 124,106 kPa (18,000 psi) to 1,206,583 kPa (175,000 psi), 144,790 kPa (21,000 psi) to 1,068,687 kPa (155,000 psi), or 144,790 kPa (21,000 psi) to 620,528 kPa (90,000 psi) in the second direction.

The film 10, 20, 21, and 22 has sufficient stiffness for good performance during printing and in-mold labeling operations, but the film, in comparison to a conventional biaxially stretched film, is generally less stiff due to less stretching/orientation. One advantage of the film of this invention compared to a conventional biaxially stretched is greater conformability of the film when applied to a thermoplastic container 50 as an in-mold label 28. In several example embodiments, the film has an ASTM D882 2% secant modulus of 951,476 kPa or less (138,000 psi or less), 654,312 kPa or less (94,900 psi or less), 629,491 kPa or less (91,300 psi or less), or 604,670 kPa or less (87,700 psi or less) in the second direction. Conversion of the inventive film to an in-mold label by printing, drying, and subsequent operations including cutting into sheets, stacking of the sheets, and die cutting of stacked sheets to give stacks of individual labels, as well as an in-mold labeling process, are known and are described in US Patent No. 6,716,501 to Kovalchuk et al. A second advantage the film of this invention is that less stretching/orientation is required in comparison to conventional biaxially stretched films for films made opaque due to cavitation during hot stretching. Cavitated and opaque films of this invention, when applied to a thermoplastic container through an in-mold labeling process, generally have a noticeably smoother surface in comparison to a conventional biaxially stretched film. In several example embodiments, an opaque film, made opaque by cavitation and applied as an in-mold label to a thermoplastic container in an in-mold labeling process, has an American National Standards Institute (ANSI) B46.1 Roughness Average (Rₐ or Arithmetic Average Roughness Height) on the print skin surface of 1.65 micrometers or less (65 microinches or less), 1.4 micrometers or less (55 microinches or less), or 1.14 micrometers or less (45 microinches or less). In several example embodiments, the film is made opaque by cavitation and has an ASTM D589 opacity of at least 70%, at least 80%, or at least 90%.

The film 10, 20, 21, and 22 can be surface-treated to increase surface energy and to enhance the performance of the surfaces of the print skin layer 14 and adhesive skin layer 16 for ink receptivity and adhesion, respectively. The film can be surface-treated on the print skin layer, the adhesive skin layer, or both of the print skin layer and the adhesive skin layer. Although surface treatment of the film can be done at any time during film processing, it is generally done between, or after, the biaxial stretching steps. Surface treatments comprise corona treatment, flame treatment, plasma treatment, coating the surface with a material, for example, a lacquer to enhance performance, or a combination of any of the foregoing surface treatments. In an example embodiment, the film is hot stretched in the machine direction, annealed, corona-treated on the surface of the print skin layer, hot stretched in the transverse direction, and annealed.

The film 10, 20, 21 and 22 of this invention can have a thickness "T" ranging from 5,1x10⁻⁵ m (2 mils) to 2,5x10⁻⁴ m (10 mils), from 6,3x10⁻⁵ m (2.5 mils), to 2,3x10⁻⁴ m (9 mils), or from 7,6x10⁻⁵ m (3 mils) to 2.0x10⁻⁴ m (8 mils). Although the layers of the film can vary greatly in thickness relative to each other, the base layer 12 is generally thicker than skin and tie layers 14, 16, 24, and 26. In several example embodiments, the thickness of the base layer "T_{BL}" is greater than 50%, greater than 55%, or greater than 59% of the thickness of the film "T". In other example embodiments, the thickness of the print skin layer "T_{PSL,}" the adhesive skin layer "T_{ASL,}" and tie layer "T_{TL,}" "T_{FTL}," or "T_{STL}" is less than 50%, less than 35%, or less than 20% of the thickness of the film "T". The skin and tie layers can be the same or different in thickness.

An exemplary method according to the invention improves the performance of a multilayered film 10, 20, 21, and 22, as described throughout this description when the film is used as a label 28 in an in-mold labeling process, and comprises stretching the film biaxially in both the machine and transverse directions where the stretch ratio in a first direction is greater than 2:1 to 10:1 and the stretch ratio in a second direction ranges from 1.02:1 to 1.8:1, where the film comprises a print skin layer 14 having an upper surface 30 and a lower surface 32 and comprising at least one thermoplastic polymer, a base layer 12 having an upper surface 34 and a lower surface 36 and comprising at least one thermoplastic polymer, and an adhesive skin layer 16 having an upper surface 38 and a lower surface 40 and comprising at least one heat-activated thermoplastic polymer. The composition of the print skin layer is different from the composition of the base layer, the lower surface 32 of the print skin layer overlies the upper surface 34 of the base layer, the upper surface 38 of the adhesive skin layer underlies the lower surface 36 of the base layer. The film has an ASTM D1204 or ASTM D2732 shrinkage at 1000°C of at least 0.5% in both the machine and transverse directions, the film has an ASTM D882 2% secant modulus of at least 679,134 kPa (98,500 psi) in the first direction, and the film has improved performance when used as a label in an in-mold labeling process. This method improves the performance of the film when used as a label in an in-mold labeling process by providing a highly conformable label on a thermoplastic container 50 where the label is free of, or characterized by a reduction in blistering and also has a smooth appearance, as measured by the ANSI B46.1 Roughness Average, when the film is opaque due to cavitation.

### Film Examples

The following nonlimiting examples further describe and illustrate the present invention.

### Example 1

YUPO ITE 105 (by Yupo Corporation of Tokyo, Japan) is a commercial, conventionally biaxially stretched, cavitated, opaque, in-mold label film.

### Example 2

ARJOBEX Adc (by Arjobex Ltd. of Essex, England) is a commercial, conventionally biaxially stretched, cavitated, opaque, in-mold label film.

### Example 3

Dow's OPTIMLT^{™} (by The Dow Chemical Company of Midland, Michigan) is a commercial, cast (not stretched), in-mold label film.

### Example 4

AVERY DENNISON SFW (by Avery Dennison Corporation of Pasadena, California) is a commercial, machine-direction oriented (MDO), cavitated, opaque, in-mold label film.

### Example 5

Avery Dennison SFW Embossed is a commercial, MDO, cavitated, opaque, in-mold label film that is embossed on the adhesive skin layer 16 to facilitate air egress during the in-mold labeling process and to minimize blister formation.

### Example 6

A 114.3 micrometer (4.5 mils) thick, four-layered, cavitated opaque film is prepared by coextrusion, machine-direction orientation near 127°C by stretching the film 6 times its starting length, annealing near 127°C, corona treatment of the print skin layer 14, transverse-direction orientation near 143°C by stretching the film 1.1 times its starting width, and annealing near 143°C where the transverse-direction orientation and subsequent annealing is done at a line speed of 0,762 m/s (150 feet per minute).

Referring to Figure 2A, the thickness of the print skin layer "T_{PSL}" is 15% of the film thickness "T" and contains on a wt. basis 47% HUNTSMAN P4G4K-173X nucleated polypropylene homopolymer, 50% A. T. Plastics Inc.'s ATEVA^{®} 1821 ethylene-vinyl acetate copolymer, 2% A. Schulman's VLA-55-SF antistatic agent concentrate, and 1% AMPACET 10919 processing aid concentrate.

The thickness of the base layer "T_{BL}" is 60% of the film thickness "T" and contains on a wt. basis 30% HUNTSMAN P4G4K-173X nucleated polypropylene homopolymer, 60% A. Schulman's PF-97-N particulate solids concentrate, and 10% A. Schulman POLYBATCH WHITE P8555 SD pigment concentrate.

The thickness of the tie layer "T_{TL}" is 10% of the film thickness "T" and contains on a wt. basis 30% HUNTSMAN P4G4K-173X nucleated polypropylene homopolymer, 54% A. Schulman's PF-97-N particulate solids concentrate, 10% A. Schulman POLYBATCH WHITE P8555 SD pigment concentrate, and 6% AMPACET 101964 antiblock agent concentrate.

The thickness of the adhesive skin layer "T_{ASL}" is 15% of the film thickness "T" and contains on a wt. basis 60% EXXONMOBIL EXACT^{®} 8203 polyethylene plastomer, 34.5% A. T. Plastics Inc.'s ATEVA^{®} 1231 ethylene-vinyl acetate copolymer, 2% A. Schulman's VLA-55-SF antistatic agent concentrate, 2.5% A. Schulman's POLYBATCH AB-5 antiblock agent concentrate, and 1% AMPACET 10919 processing aid concentrate.

### Example 7

The film of Example 7 is the same as the film of Example 6 except that the transverse-direction orientation and subsequent annealing are done near 127°C instead of near 143°C.

### Example 8

A 127 micrometer (5 mils) thick, four-layered, cavitated, opaque film is prepared by coextrusion, machine-direction orientation near 127°C by stretching the film 6 times its starting length, annealing near 127°C, corona treatment of the print skin layer 14, transverse-direction orientation near 127°C by stretching the film 1.15 times its starting width, and annealing near 127°C where the transverse-direction orientation and subsequent annealing is done at a line speed of 0,762 m/s (150 feet per minute).

Referring again to Figure 2A, the thickness of the print skin layer "T_{PSL}" is 10% of the film thickness "T" and contains on a wt. basis 47% HUNTSMAN P4G4K-173X nucleated polypropylene homopolymer, 50% A. T. Plastics Inc.'s ATEVA^{®} 1821 ethylene-vinyl acetate copolymer, 2% A. Schulman's VLA-55-SF antistatic agent concentrate, and 1% AMPACET 10919 processing aid concentrate.

The thickness of the base layer "T_{BL}" is 65% of the film thickness "T" and contains on a wt. basis 30% HUNTSMAN P4G4K-173X nucleated polypropylene homopolymer, 58% A. Schulman's PF-92-D particulate solids concentrate, 10% A. Schulman's POLYBATCH WHITE P8555 SD pigment concentrate, and 2% A. Schulman's XNAP-9525 nucleating agent concentrate.

The thickness of the tie layer "T_{TL}" is 10% of the film thickness "T" and contains on a wt. basis 30% HUNTSMAN P4G4K-173X nucleated polypropylene homopolymer, 52% A. Schulman's PF-92-D particulate solids concentrate, 10% A. Schulman's POLYBATCH WHITE P8555 SD pigment concentrate, 6% AMPACET 101964 antiblock agent concentrate, and 2% A. Schulman's XNAP-9525 nucleating agent concentrate.

The thickness of the adhesive skin layer "T_{ASL}" is 15% of the film thickness "T" and contains on a wt. basis 60% EXXONMOBIL EXACT^{®} 8203 polyethylene plastomer, 34.5% A. T. Plastics Inc.'s ATEVA^{®} 1231 ethylene-vinyl acetate copolymer, 2% A. Schulman's VLA-55-SF antistatic agent concentrate, 2.5% A. Schulman's POLYBATCH AB-5 antiblock agent concentrate, and 1% AMPACET 10919 processing aid concentrate.

The film 10, 20, 21, and 22 examples were evaluated for shrinkage and stiffness. The film examples were then applied as labels (28) to 3,79 L (128 ounce) thermoplastic containers 50 in an in-mold labeling process, and the corresponding applied in-mold labels were evaluated for blister performance and for surface roughness in the case of labels from cavitated opaque films. The following table gives the results of these evaluations, which demonstrate conformability, excellent blister performance, and smoothness benefits or advantages when the inventive films are cavitated opaque films.

| Film Example | Film Type¹ | Shrinkage², MD/TD | Stiffness³, MD/TD | Blister Rating⁴ | Rₐ Roughness⁵ |
|---|---|---|---|---|---|
| 1 | Conv biax | 1.4/0.7 | 648/1310 | 50 | 2.45 |
| 2 | Conv biax | 2.9/1.4 | 958/889 | 50 | 4.25 |
| 3 | Cast | 1.3/0.7 | 641/627 | 22 | |
| 4 | MDO | 5.9/0.0 | | 38 | 0.99 |
| 5 | MDO, embossed | 6.2/0.1 | 1110/510 | 48 | 1.28 |
| 6 | nonconv biax | 1/1.8 | 820/186 | 50 | 0.71 |
| 7 | nonconv biax | 1.6/2.5 | 834/179 | 50 | |
| 8 | nonconv biax | 1.7/3.3 | 1158/324 | 50 | 0.78 |

| | | | | | |
|---|---|---|---|---|---|
| ¹ The film types are the following: conventional biaxially oriented film (conv biax) that is stretched in both the machine and the transverse directions at a ratio of 2:1 or greater, cast film (cast) that is not oriented, machine-direction oriented film (MDO), which is stretched in the machine direction at a ratio of 2:1 or greater, and nonconventional biaxially oriented film (nonconv biax) that is stretched in the machine direction at a ratio of 2:1 or greater and in the transverse direction at a ratio of less than 2:1. ² MD and TD shrinkage in % units for the films is measured per ASTM D1204 after 15 minutes in an oven at 100°C. ³ MD and TD stiffness in x10³ kPa units for the films is measured per ASTM D882 2% secant modulus. ⁴ The blister rating on a scale of 0 to 50 for the corresponding applied labels is based on 50 labeled containers for each film example, where the rating number indicates the number of containers that are blister-free. A rating of 50 indicated that all the containers are blister-free. Doubling the blister rating gives the percentage of blister-free containers. So, for example, a blister rating of 45 indicates that 90% of the containers are blister-free. ⁵ The surface roughness in micrometer units for the corresponding applied labels from cavitated opaque films is measured per ANSI B46.1 Rₐ Roughness Average on the print skin surface. | | | | | |

All numerical quantities in this application other than in the Background of the Invention section are understood to be modified by the word "about" except in examples and where explicitly indicated otherwise. All range and ratio limits in the Summary of the Invention section, the Detailed Description of the Preferred Embodiments section, and the appended claims are combinable.

While the invention has been presented in the Summary of the Invention section, the Detailed Description of the Preferred Embodiments section, the appended claims, and the drawings, it is understood that various modifications of this invention will become apparent to those skilled in the art upon reading this application. Accordingly, the foregoing detailed description of the preferred embodiments of the invention is provided for purposes of illustration, and it is not intended to be exhaustive or to limit the invention to the particular embodiments disclosed. The embodiments may provide different capabilities and benefits, depending on the configuration used to implement the key features of the invention. Therefore, the scope of the invention is defined only by the following claims.

## Claims

1. A film which is a label for in-mold labeling, comprising:
a. a print skin layer having an upper surface and a lower surface and including at least one thermoplastic polymer;
b. a base layer having an upper surface and a lower surface and including at least one thermoplastic polymer; and
c. an adhesive skin layer having an upper surface and a lower surface and including at least one heat-activated thermoplastic polymer;
d. wherein:
i. the composition of the print skin layer is different from the composition of the base layer,
ii. the lower surface of the print skin layer overlies the upper surface of the base layer,
iii. the upper surface of the adhesive skin layer underlies the lower surface of the base layer,
iv. the film has been stretched biaxially in both a machine direction and a transverse direction wherein a stretch ratio in a first direction is greater than 2:1 to 10:1, and a stretch ratio in a second direction ranges in value from 1.02:1 to 1.8:1,
v. the film has an ASTM D1204 shrinkage at 100°C of at least 0.5% in both the machine direction and the transverse direction, and
vi. the film has an ASTM D882 2% secant modulus of at least 679,134 kPa (98,500 psi) in the first direction.

2. The film of claim 1, wherein the first direction is the machine direction and the second direction is the transverse direction.

3. The film of claim 1, wherein the film has an ASTM D1204 shrinkage at 100°C of at least 0.5% to less than 12% in both the machine direction and the transverse direction.

4. The film of claim 1, wherein the film has an ASTM D882 2% secant modulus from 679,134 kPa (98,500 psi) to 2,447,639 kPa (355,000 psi) in the first direction.

5. The film of claim 1, wherein the film is formed in an extrusion of at least one layer.

6. The film of claim 1, wherein the film is formed by coextruding the print skin layer, the base layer, and the adhesive skin layer to form a coextrudate.

7. The film of claim 1, wherein the film is formed by coextruding the print skin layer and the base layer to form a coextrudate, and the adhesive skin layer is applied as a coating to the coextrudate of the print skin layer and the base layer.

8. The film of claim 1, wherein the film is annealed at least one time wherein the film has an ASTM D1204 shrinkage at 100°C of at least 0.5% to less than 10% in both the machine direction and the transverse direction.

9. The film of claim 1, wherein the film is first stretched in the machine direction and annealed, and then the film is stretched in the transverse direction and annealed.

10. The film of claim 1, further comprising at least one tie layer.

11. The film of claim 1, wherein:
a. the print skin layer includes a polymer selected from the group consisting of a polyethylene having a density below 0.94 g/cm³, an alkene-unsaturated carboxylic acid copolymer, an alkene-unsaturated carboxylate ester copolymer, a metal salt of an alkene-unsaturated carboxylic acid copolymer, and a mixture of any of the foregoing polymers; and
b. the base layer includes a polymer selected from the group consisting of a high-density polyethylene, a polypropylene homopolymer, a polypropylene copolymer, and a mixture of any of the foregoing polymers.

12. The film of claim 11, wherein the heat-activated thermoplastic polymer of the adhesive skin layer includes a polymer selected from the group consisting of a polyethylene having a density below 0.94 g/cm³, an alkene-unsaturated carboxylic acid copolymer, an alkene-unsaturated carboxylate ester copolymer, a metal salt of an alkene-unsaturated carboxylic acid copolymer, a polypropylene selected from the group consisting of a homopolymer and a copolymer and a mixture of any of the foregoing polypropylene polymers wherein the polypropylene is prepared using a metallocene catalyst, and a mixture of any of the foregoing polymers.

13. The film of claim 1, wherein the film has been stretched in the first direction at a stretch ratio from 4:1 to 8:1 and in the second direction at a stretch ratio from 1.03:1 to 1.55:1.

14. The film of claim 1, wherein the at least one heat-activated thermoplastic polymer is present in the adhesive skin layer on a weight basis of greater than 55% and has a melting point of 125°C or less.

15. A method of manufacturing a film suitable as a label for in-mold labeling, the method comprising:
a. providing the film; and
b. stretching the film biaxially in both a machine direction and a transverse direction;
c. wherein:
i. the stretch ratio in a first direction is greater than 2:1 to 10:1,
ii. the stretch ratio in a second direction is 1.02:1 to 1.8:1,
iii. the film includes :
A. a print skin layer having an upper surface and a lower surface and including at least one thermoplastic polymer,
B. a base layer having an upper surface and a lower surface and including at least one thermoplastic polymer, and
C. an adhesive skin layer having an upper surface and a lower surface and including at least one heat-activated thermoplastic polymer,
iv. the composition of the print skin layer is different from the composition of the base layer,
v. the lower surface of the print skin layer overlies the upper surface of the base layer,
vi. the upper surface of the adhesive skin layer underlies the lower surface of the base layer,
vii. the film has an ASTM D1204 shrinkage at 100°C of at least 0.5% in both the machine direction and the transverse direction, and
viii. the film has an ASTM D882 2% secant modulus of at least 679,134 kPa (98,500 psi) in the first direction.

16. The method of claim 15, wherein the first direction is the machine direction and the second direction is the transverse direction.

## Patentansprüche

1. Folie, die ein Etikett für das Blasformetikettieren ist, umfassend:
a. eine Druckrandschicht mit einer oberen Oberfläche und einer unteren Oberfläche und umfassend wenigstens ein thermoplastisches Polymer;
b. eine Basisschicht mit einer oberen Oberfläche und einer unteren Oberfläche und umfassend wenigstens ein thermoplastisches Polymer; und
c. eine Kleberandschicht mit einer oberen Oberfläche und einer unteren Oberfläche und umfassend wenigstens ein wärmeakfiiviertes thermoplastisches Polymer;
d. wobei:
i. die Zusammensetzung der Druckrandschicht unterschiedlich zu der Zusammensetzung der Basisschicht ist,
ii. die untere Oberfläche der Druckrandschicht auf der oberen Oberfläche der Basisschicht liegt,
iii. die obere Oberfläche der Kleberandschicht unter der unteren Oberfläche der Basisschicht liegt,
iv. die Folie biaxial sowohl in der Laufrichtung als auch in der Querrichtung gestreckt worden ist, wobei ein Streckverhältnis in einer ersten Richtung größer als 2:1 bis 10:1 ist und ein Streckverhältnis in einer zweiten Richtung zwischen 1,02:1 und 1,8:1 liegt,
v. die Folie eine ASTM D1204 Schrumpfung bei 100 °C von wenigstens 0,5 % sowohl in der Laufrichtung als auch in der Querrichtung aufweist, und
vi. die Folie einen ASTM D882 2 % Sekantenmodul von wenigsten 679.134 kPa (98.500 psi) in der ersten Richtung aufweist.

2. Folie nach Anspruch 1, wobei die erste Richtung die Laufrichtung und die zweite Richtung die Querrichtung ist.

3. Folie nach Anspruch 1, wobei die Folie eine ASTM D1204 Schrumpfung bei 100 °C von wenigstens 0,5 % bis weniger als 12 % sowohl in der Laufrichtung als auch in der Querrichtung aufweist.

4. Folie nach Anspruch 1, wobei die Folie einen ASTM D882 2 % Sekantenmodul von 679.134 kPa (98.500 psi) bis 2.447.639 kPa (355.000 psi) in der ersten Richtung aufweist.

5. Folie nach Anspruch 1, wobei die Folie mittels Extrusion von wenigstens einer Schicht gebildet ist.

6. Folie nach Anspruch 1, wobei die Folie durch Coextrusion der Druckrandschicht, der Basisschicht und der Kleberandschicht, um ein Coextrudat zu bilden, gebildet ist.

7. Folie nach Anspruch 1, wobei die Folie durch Coextrusion der Druckrandschicht und der Basisschicht, um ein Coextrudat zu bilden, gebildet ist, und die Kleberandschicht als Beschichtung auf das Coextrudat aus der Druckrandschicht und der Basisschicht aufgebracht ist.

8. Folie nach Anspruch 1, wobei die Folie wenigstens einmal getempert ist, wobei die Folie eine ASTM D1204 Schrumpfung bei 100 °C von wenigstens 0,5 % bis weniger als 10 % sowohl in der Laufrichtung als auch in der Querrichtung aufweist.

9. Folie nach Anspruch 1, wobei die Folie zunächst in der Laufrichtung gestreckt und getempert ist und dann die Folie in der Querrichtung gestreckt und getempert ist.

10. Folie nach Anspruch 1, ferner umfassend wenigstens eine Haftvermittlerschicht.

11. Folie nach Anspruch 1, wobei:
a. die Druckrandschicht ein Polymer, ausgewählt aus der Gruppe bestehend aus einem Polyethylen mit einer Dichte von weniger als 0,94 g/cm³, einem Alken-ungesättigten Carbonsäure-Copolymer, einem Alken-ungesättigten Carboxylatester-Copolymer, einem Metallsalz von einem Alken-ungesättigten Carbonsäure-Copolymer, und einer Mischung aus irgendeinem der vorangehenden Polymere, umfasst; und
b. die Basisschicht ein Polymer, ausgewählt aus der Gruppe bestehend aus einem Polyethylen hoher Dichte, einem Polypropylenhomopolymer, einem Polypropylencopolymer, und einer Mischung aus irgendeinem der vorangehenden Polymere, umfasst.

12. Folie nach Anspruch 11, wobei das wärmeaktivierte thermoplastische Polymer der Kleberandschicht ein Polymer, ausgewählt aus der Gruppe bestehend aus einem Polyethylen mit einer Dichte von weniger als 0,94 g/cm³, einem Alken-ungesättigten Carbonsäure-Copolymer, einem Alken-ungesättigten Carboxylatester-Copolymer, einem Metallsalz von einem Alken-ungesättigten Carbonsäure-Copolymer, einem Polypropylen, ausgewählt aus der Gruppe bestehend aus einem Homopolymer und einem Copolymer und einer Mischung aus irgendeinem der vorangehenden Polypropylenpolymere, wobei das Polypropylen unter Verwendung eines Metallocenkatalysators hergestellt ist, und einer Mischung aus irgendeinem der vorangehenden Polymere, umfasst.

13. Folie nach Anspruch 1, wobei die Folie in der ersten Richtung bei einem Streckverhältnis von 4:1 bis 8:1 und in der zweiten Richtung bei einem Streckverhältnis von 1,03:1 bis 1,55:1 gestreckt ist.

14. Folie nach Anspruch 1, wobei das wenigstens eine wärmeaktivierte thermoplastische Polymer in der Kleberandschicht mehr als 55 %, bezogen auf das Gewicht, ausmacht und einen Schmelzpunkt von 125 °C oder weniger aufweist.

15. Verfahren zur Herstellung einer Folie geeignet als Etikett für das Blasformetikettieren, wobei das Verfahren umfasst:
a. Bereitstellen der Folie; und
b. biaxiales Strecken der Folie sowohl in der Laufrichtung als auch in der Querrichtung;
c. wobei:
i. das Streckverhältnis in einer ersten Richtung größer als 2:1 bis 10:1 ist,
ii. das Streckverhältnis in einer zweiten Richtung 1,02:1 bis 1,8:1 ist,
iii. die Folie umfasst:
A. eine Druckrandschicht mit einer oberen Oberfläche und einer unteren Oberfläche und umfassend wenigstens ein thermoplastisches Polymer,
B. eine Basisschicht mit einer oberen Oberfläche und einer unteren Oberfläche und umfassend wenigstens ein thermoplastisches Polymer, und
C. eine Kleberandschicht mit einer oberen Oberfläche und einer unteren Oberfläche und umfassend wenigstens ein wärmeaktiviertes thermoplastisches Polymer,
iv. die Zusammensetzung der Druckrandschicht unterschiedlich zu der Zusammensetzung der Basisschicht ist,
v. die untere Oberfläche der Druckrandschicht auf der oberen Oberfläche der Basisschicht liegt,
vi. die obere Oberfläche der Kleberandschicht unter der unteren Oberfläche der Basisschicht liegt,
vii. die Folie eine ASTM D1204 Schrumpfung bei 100 °C von wenigstens 0,5 % sowohl in der Laufrichtung als auch in der Querrichtung aufweist, und
viii. die Folie einen ASTM D882 2 % Sekantenmodul von wenigsten 679,134 kPa (98.500 psi) in der ersten Richtung aufweist.

16. Verfahren nach Anspruch 15, wobei die erste Richtung die Laufrichtung und die zweite Richtung die Querrichtung ist.

## Revendications

1. Film qui est une étiquette pour étiquetage au moulage, comprenant :
a. une couche superficielle d'impression comportant une surface supérieure et une surface inférieure et comprenant au moins un polymère thermoplastique ;
b. une couche de base comportant une surface supérieure et une surface inférieure et comprenant au moins un polymère thermoplastique ; et
c. une couche superficielle adhésive comportant une surface supérieure et une surface inférieure et comprenant au moins un polymère thermoplastique activé par la chaleur ;
d. dans lequel :
i. la composition de la couche superficielle d'impression est différente de la composition de la couche de base,
ii. la surface inférieure de la couche superficielle d'impression recouvre la surface supérieure de la couche de base,
iii. la surface supérieure de la couche superficielle adhésive se trouve sous la surface inférieure de la couche de base,
iv. le film a été étiré biaxialement aussi bien suivant la direction machine que suivant la direction transversale, le rapport d'étirage suivant la première direction étant supérieur à 2/1 et jusqu'à 10/1 et le rapport d'étirage suivant la deuxième direction variant de 1,02/1 à 1,8/1,
v. le film présente un retrait selon la norme ASTM D1204 à 100°C d'au moins 0,5% aussi bien suivant la direction machine que suivant la direction transversale, et
vi. le film a un module sécant à 2% selon la norme ASTM D882 d'au moins 679 134 kPa (98 500 psi) suivant la première direction.

2. Film selon la revendication 1, dans lequel la première direction est la direction machine et la deuxième direction est la direction transversale.

3. Film selon la revendication 1, dans lequel le film présente un retrait selon la norme ASTM D1204 à 100°C d'au moins 0,5% à moins de 12% aussi bien suivant la direction machine que suivant la direction transversale.

4. Film selon la revendication 1, dans lequel le film a un module sécant à 2% selon la norme ASTM D882 de 679 134 kPa (98 500 psi) à 2 447 639 kPa (355 000 psi) suivant la première direction.

5. Film selon la revendication 1, dans lequel le film est formé par l'extrusion d'au moins une couche.

6. Film selon la revendication 1, dans lequel le film est formé par coextrusion de la couche superficielle d'impression, de la couche de base et de la couche superficielle adhésive pour former un coextrudat.

7. Film selon à revendication. 1, dans lequel le film est formé par coextrusion de la couche superficielle d'impression et de la couche de base pour former un coextrudat, et la couche superficielle adhésive est appliquée sous à forme d'un revêtement sur le coextrudat de la couche superficielle d'impression et de la couche de base.

8. Film selon la revendication 1, dans lequel le film est recuit au moins une fois, le film présentant un retrait selon la norme ASTM D1204 à 100°C d'au moins 0,5% à moins de 10% aussi bien suivant la direction machine que suivant la direction transversale.

9. Film selon la revendication 1, dans lequel le film est tout d'abord étiré suivant la direction machine et recuit, puis le film est étiré suivant la direction transversale et recuit.

10. Film selon la revendication 1, comprenant en outre au moins une couche de liaison.

11. Film selon la revendication 1, dans lequel :
a. la couche superficielle d'impression comprend un polymère choisi dans le groupe constitué d'un polyéthylène ayant une densité inférieure à 0,94 g/cm³, d'un copolymère alcène-acide carboxylique insaturé, d'un copolymère alcène-ester de carboxylate insaturé, d'un sel de métal d'un copolymère alcène-acide carboxylique insaturé, et d'un mélange de l'un quelconque des polymères précédents ; et
b. la couche de base comprend un polymère choisi dans le groupe constitué d'un polyéthylène haute densité, d'un homopolymère de polypropylène, d'un copolymère à base de polypropylène, et d'un mélange de l'un quelconque des polymères précédents.

12. Film selon la revendication 11, dans lequel le polymère thermoplastique active par la chaleur de la couche superficielle adhésive comprend un polymère choisi dans le groupe constitué d'un polyéthylène ayant une densité inférieure à 0,94 g/cm³, d'un copolymère alcène-acide carboxylique insaturé, d'un copolymère alcène-ester de carboxylate insaturé, d'un sel de métal d'un copolymère alcène-acide carboxylique insaturé, d'un polypropylène choisi dans le groupe constitué d'un homopolymère et d'un copolymère et d'un mélange de l'un quelconque des polymères à base de polypropylène précédents dans lequel le polypropylène est préparé à l'aide d'un catalyseur métallocène, et un mélange de l'un quelconque des polymères précédents.

13. Film selon la revendication 1, dans lequel le film a été étiré suivant la première direction à un rapport d'étirage de 4/1 à 8/1 et suivant la deuxième direction à un rapport d'étirage de 1,03/1 à 1,55/1.

14. Film selon la revendication 1, dans lequel l'au moins un polymère thermoplastique activé par la chaleur est présent dans la couche superficielle adhésive sur une base massique supérieure à 55% et a un point de fusion inférieur ou égal à 125°C.

15. Procédé de fabrication d'un film adéquat en tant qu'étiquette pour étiquetage au meulage, le procédé comprenant :
a. la fourniture du film ; et
b. l'étirage du film biaxialement aussi bien suivant la direction machine que suivant la direction transversale ;
c. dans lequel :
i. le rapport d'étirage suivant la première direction est supérieur à 2/1 et jusqu'à 10/1,
ii. le rapport d'étirage suivant la deuxième direction est de 1,02/1 à 1,8/1,
iii. le film comprend :
A. une couche superficielle d'impression comportant une surface supérieure et une surface inférieure et comprenant au moins un polymère thermoplastique,
B. une couche de base comportant une surface supérieure et une surface inférieure et comprenant au moins un polymère thermoplastique, et
C. une couche superficielle adhésive comportant une surface supérieure et une surface inférieure et comprenant au moins un polymère thermoplastique active par la chaleur,
iv. la composition de la couche superficielle d'impression est différente de la composition de la couche de base,
v. la surface inférieure de la couche superficielle d'impression recouvre la surface supérieure de à couche de base,
vi. la surface supérieure de la couche superficielle adhésive se trouve sous la surface inférieure de la couche de base,
vii. le film présente un retrait selon à norme ASTM D1204 à 100°C d'au moins 0,5% aussi bien suivant la direction machine que suivant la direction transversale, et
viii. le film a un module sécant à 2% selon la norme ASTM D882 d'au moins 679 134 kPa (98 500 psi) suivant la première direction.

16. Procédé selon la revendication 15, dans lequel la première direction est la direction machine et la deuxième direction est la direction transversale.
